# EUROPEAN PATENT APPLICATION

(11) **EP 1 701 047 A1**
(43) Date of publication of application: **13.09.2006**
(21) Application number: 04820296.4
(22) Date of filing: 10.12.2004
(51) Int. Cl.: F16C 11/04, F16C 11/10

(54) **TWO-SHAFT HINGE MECHANISM ENABLING HARNESS WIRING**

(30) Priority: 11.12.2003 JP 2003413054
(71) Applicant: Mitsubishi Steel MFG. CO., LTD., Chuo-ku, Tokyo 104-8550 (JP)
(72) Inventor: Sato, Hitoshi, Chuo-ku, Tokyo 1048550 (JP); Higano, Sakae, Chuo-ku, Tokyo 1048550 (JP)
(74) Representative: Rögner, Jürgen
(86) International application number: PCT/JP2004/018475
(87) International publication number: WO 2005/057027

(57) **Abstract**

[Problem] To provide two-shaft hinge mechanism components enabling harness wiring, which are configured to realize durability, reduction in size and weight and a mechanism to restrict rotation, in cellular phones, notebook computers and remote controllers required to have more reduced size and weight and new functions.

[Solution] Rotation shaft 11 and opening/closing shaft 12 are inserted into coil spring 5, 17, concave and convex cams, a caulking component and the like, to assemble a rotation shaft torque unit and an opening/closing torque unit, and the unit is attached to hinge housing 9 to constitute the two-shaft hinge. The opening/closing torque unit is disposed either lift or right side of the hinge housing, and a pipe-like shaft with a hollow is employed as rotation shaft 11, whereby harness (thin cable) wiring is provided easily. the torque unit is configured independently from the rotation shaft and the opening/closing shaft, so that generation of a stable torque and click, improvement of durability, easy assembly of the components, reduction of size and weight by reducing the number of components, ensuring of a space by disposing the components in a concentrated manner are achieved.

## Description

### TECHNICAL FIELD

The present invention relates to two-shaft hinge components which are used in a folding/rotating mechanism part on a small electronic device such as cellular phones, notebook computers, electronic organizers, DVD monitors, and remote controllers.

### BACKGROUND ART

In most friction torque generation mechanisms on a opening/closing shaft and a rotation shaft of conventional two-shaft hinges, structures in which a plate member wraps around a shaft or a disc spring is pressed to generate rotation friction torque (see Patent Document 1).

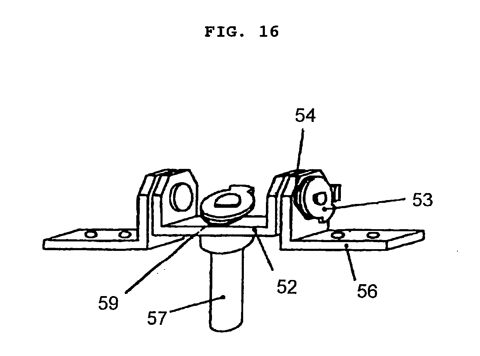

Fig. 16 shows an example of conventional two-shaft hinge. Plate spring 54 formed into a wave like shape or the like and bracket 56 are fixed onto each side of supporting plate 52 of a pressed opening/closing shaft by means of fixing flange 53. Rotation shaft 57 is fixed with piercing through a center portion of supporting plate 52 of the opening/closing shaft, and rotation torque is generated by a method of pressing plate spring 59.

In the conventional hinge, not only a rotating angle stopper mechanism is not provided, but also a torque is generated by a method of pressing a friction plate by using repulsive force of a disc spring, thus problems that friction caused on supporting plate 52 and bracket 56, and, a free-play, looseness and deterioration of durability due to deformation (permanent strain) of plate spring 54 arise. The fluctuation in torque or deterioration of durability which is involved in change with time causes degrading the quality of the device and a breakdown of the device. In the latest two-shaft hinges, compared to the conventional hinges, the operability and feelings in opening/closing and rotating are regarded, and thus a mechanism to limit the rotating angle and opening/closing angle, maintenance of a stable torque value, high durability, and reduction in size and weight are strongly demanded.

### DISCLOSURE OF THE INVENTION

The problem to be solved by the present invention is to provide two-shaft hinge components which enable harness wiring by using a hollow rotation shaft and thereby realize durability and reduction in size and weight in cellular phones, notebook computers or the like in which further reduction in size and weight is demanded.
Patent Document 1: Japanese Patent Publication No. 2002-155923

### MEANS TO SOLVE THE PROBLEMS

The present invention is constituted as described hereinafter.
The invention described in claim 1 obtains a two-shaft hinge having a rotation shaft and an opening/closing shaft, comprising: a rotation torque unit in which a plurality of rotation torque generating portions are provided on the rotation shaft, the rotation torque generating portion being assembled by putting a coil spring around an outer periphery of the rotation shaft having a penetrating hole and by abutting a fixing cam and a rotating cam on both ends of the coil spring; and an opening/closing torque unit in which a plurality of opening/closing torque generating portions are provided on the opening/closing shaft, the opening/closing torque generating portion being assembled by putting a coil spring around the opening/closing shaft and by abutting a fixing cam and a rotating cam on both ends of the coil spring; wherein, the two-shaft hinge has a two-shaft structure in which an axial direction of the rotation shaft and an axial direction of the opening/closing shaft are assembled to a hinge housing to be perpendicular to each other, the torque units which generate a sliding torque and a click torque at a rotation and a opening/closing operation function on the rotation shaft and the opening/closing shaft, and the opening/closing torque unit is assembled to either side or both right and left sides of the rotation torque unit.
Here, the respective axis lines of the axial direction of the rotation shaft and of the axial direction of the opening/closing shaft are perpendicular to each other, but do not necessarily intersect with each other.

The invention described in claim 2 obtains a two-shaft hinge having a rotation shaft and an opening/closing shaft, comprising: a rotation torque unit in which a pair of rotation torque generating portions is provided on the rotation shaft, the rotation torque generating portion being assembled by putting a coil spring around an outer periphery of the rotation shaft having a penetrating hole and by abutting a fixing cam and a rotating cam on one end of the coil spring; and an opening/closing torque unit in which a plurality of opening/closing torque generating portions are provided on the opening/closing shaft, the opening/closing torque generating portion being assembled by putting a coil spring around the opening/closing shaft and by abutting a fixing cam and a rotating cam on both ends of the coil spring; wherein, the two-shaft hinge has a two-shaft structure in which an axial direction of the rotating axis and an axial direction of the opening/closing shaft are assembled to a hinge housing to be perpendicular to each other, and the torque units which generate a sliding torque and a click torque at a rotation and an opening/closing operations function on the rotation shaft and the opening/closing shaft, and the opening/closing torque unit is assembled to either side or both right and left sides of the rotation torque unit.

The invention described in claim 3 is the two-shaft hinge according to claim 1 or claim 2, wherein the sliding torque and the click torque are generated by abutting the fixing cam and the rotating cam in the plurality of rotation torque generating portions provided on the rotation shaft, and positions of a groove (concave) and a protrusion (convex) of the cams used by the rotation shaft by pair and/or a different number of cams are combined, whereby the rotation torque unit which incorporates with the plurality of rotation torque generating portions having different torque generation operations is formed, and the torque unit is assembled on the rotation shaft. Whereby, the two-shaft hinge that shows a more complex rotation torque is realized.

The invention described in claim 4 is the two-shaft hinge according to claim 1 and claim 2, wherein the sliding torque and the click torque are generated by abutting the fixing cam and the rotating cam in the plurality of opening/closing torque generating portions provided on the opening/closing shaft, and positions of a groove (concave) and a protrusion (convex) of the cams used by the opening/closing shaft by pair and/or a different number of cams are combined, whereby the opening/closing torque unit which incorporates with the plurality of opening/closing torque generating portions having different torque generation operations is formed, and the torque unit is assembled on the opening/closing shaft. Whereby, the two-shaft hinge that shows a more complex opening/closing torque characteristics is realized.

The invention described in claim 5 is the two-shaft hinge according to claim 1 and claim 2, wherein a part of a cross section of the rotation shaft and the opening/closing shaft is formed to be a quadrangle or to have a major axis and a minor axis, which is other than a circle, and the rotation shaft and the opening/closing shaft having a shape which allows the fixing cams for rotation and opening/closing used in the rotation and the opening/closing torque generating portions to move in an axial direction of the rotation shaft and the opening/closing shaft but which inhibits them from rotating on a periphery of the rotation shaft, are employed.

The invention described in claim 6 realizes the two-shaft hinge according to claim 1 and claim 2, wherein a stopper mechanism to restrict a rotation angle and an opening/closing angle of the rotation shaft and the opening/closing shaft is mounted so that a rotation range of the rotation shaft and the opening/closing shaft is restricted.

The invention described in claim 7 realizes the two-shaft hinge according to claim 1 and claim 2, wherein a disc spring, a waved plate spring, or a thin plate spring is employed in place of the coil spring which generates an abutting force in the torque generating portions used in the rotation torque unit and the opening/closing torque unit, so that a size is reduced.

The invention described in claim 8 realizes the two-shaft hinge according to claim 1 and claim 2, wherein a penetrably holed shaft in which a through-hole is provided at a center of the rotation shaft is used to enable a harness wiring.

The invention described in claim 9 is the two-shaft hinge according to claim 1 and claim 2, wherein a case for the rotation shaft and a case for the opening/closing shaft in each of which an outer periphery thereof partially has a groove or a deformed cross section other than a circle, are fitted with or fixed to the rotating cams in each of which an outer periphery thereof has a protrusion or a deformed cross section, in order to effectively transmit a sliding torque force and a click torque force, which are generated in the rotating cams used on the rotation shaft and the opening/closing shaft. Whereby, reduction in size, improvement in strength, and improvement in durability can be achieved.

The invention described in claim 10 is the two-shaft hinge according to claim 1 and claim 2, wherein the rotating cam used in the rotation torque generating portion is configured to be another member as a bottom portion to which the rotation torque unit is fitted and attached in the hinge housing. Whereby, reduction in a number of components, reduction in size, and improvement in strength of the hinge housing can be achieved.

The invention described in claim 11 realizes the two-shaft hinge according to claim 1 and claim 2, wherein the rotation torque unit and the opening/closing torque unit are assembled as an independent unit, thereafter they are fitted and attached to or screwed into the hinge housing in which a means for fitting or screwing to fix is provided in advance.

The invention described in claim 12 is the two-shaft hinge according to claim 1 and claim 2, wherein, for mounting and fixing the two-shaft hinge to a device chassis, a fixing base component adhered to the rotation shaft is added and the two-shaft hinge is fixed by the base, whereby the device chassis is designed easily.

The invention of claim 1 can realize a two-shaft hinge which has excellent durability because it employs a plurality of cam mechanisms to stably and securely achieve a sliding torque and a click torque in the torque generation mechanisms on the rotation side and the opening/closing side of the two-shaft hinge. This invention shows a large effect in significant reduction of the number of components and reduction in size of the two-shaft hinge. This invention also exerts an effect that enables harness (cable) wiring by making the center of the rotation shaft hollow.

The invention of claim 2 can realize a two-shaft hinge which has excellent durability because it employs a pair of torque generation mechanisms on the rotation side and a plurality of torque generation mechanisms on the opening/closing side to stably and securely achieve the sliding torque and click torque. This invention exhibits a large effect in significant reduction of the number of components and reduction of the size of the two-shaft hinge. This invention also shows an effect that enables harness (cable) wiring by making the center of the rotation shaft a penetrating hole.

The inventions of claim 3 and claim 4 exert an effect that generates complex sliding torque and click torque by incorporating cams operating differently in the plurality of cam mechanisms which are mounted in the rotation and the opening/closing torque generating portions.

The invention of claim 5 is to ensure a stable operation of the fixing cams for the rotation shaft and the opening/closing shaft, and thus shows a large effect in preventing the feeling of looseness and free-play.

The invention of claim 6 exerts an effect of obtaining a two-shaft hinge which restricts the range of rotating angle by mounting a stopper on the rotation and the opening/closing shafts.

The invention of claim 7 exerts an effect that enables reduction of size by employing a disc spring, an waved plate spring, or a thin plate spring instead of the coil spring.

The invention of claim 8 exhibits an effect that enables harness (cable) wiring by providing a penetrating hole which penetrates through the center of the rotation shaft.

The inventions of claim 9, claim 10, and claim 11 exert an effect which contributes to the torque transfer characteristic, prevention of a free-play, improvement in strength, and productivity of assembling units, and even enables reduction in size.

The invention of claim 12 exerts an effect that makes designing of the two-shaft hinge and attaching it to the device easy and firm by employing a technique of a fixing base.

### BEST MODE FOR CARRYING OUT THE INVENTION

Embodiments of the present invention are described hereinafter with reference to the drawings.

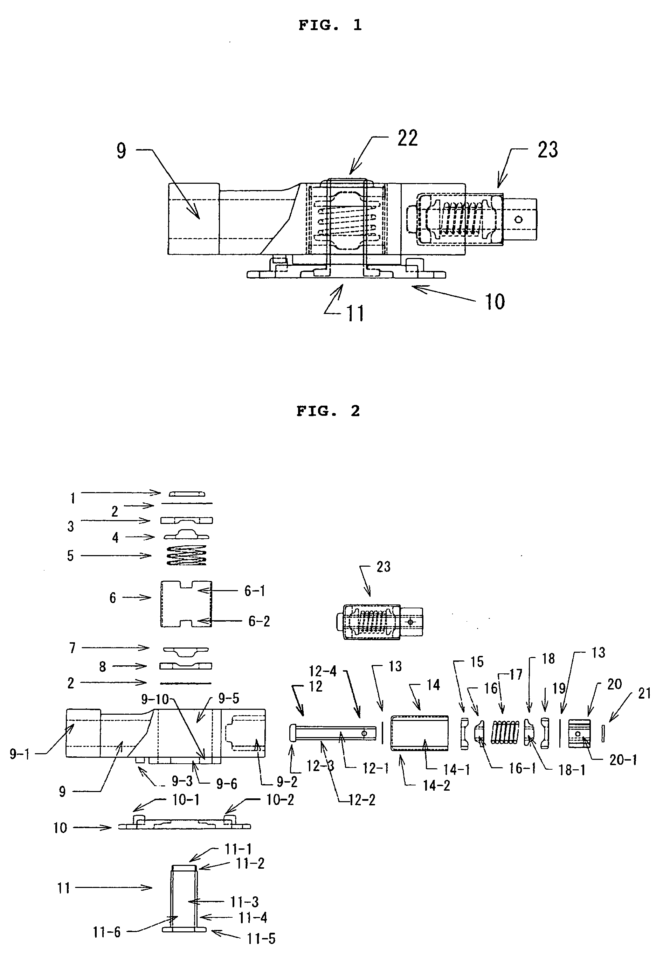

Fig. 1 shows a partial cross-sectional front view of an example of embodiments of claim 1, claim 8, and claim 12 with regard to the two-shaft hinge of the present invention enabling harness wiring. The two-shaft hinge is configured by fitting and attaching rotation torque unit 22 and opening/closing torque unit 23 to hinge housing 9. In the two-shaft hinge shown in Fig. 1, the bottom of rotation shaft 11 to opening 22 at the top thereof is a penetrating hole, through which harness (cable) wiring for electrical connection can pass. Rotation shaft 11 and fixing base 10 in Fig. 1 are fitted and fixed to each other, and when attaching fixing base 10 to a device or the like, hinge housing 9 can rotate clockwise or counterclockwise around rotation shaft 11 as the center. Torque unit 23 for the opening/closing shaft, which is attached to hinge housing 9, can rotate with respect to the opening/closing shaft.

Fig. 2 shows a component configuration diagram of the two-shaft hinge related to an example of embodiments of claim 1, claim 5, claim 6, claim 11 and the like of the present invention. The rotation system is constituted by components of, from the bottom of the figure, rotation shaft 11 having a inside hole, fixing base 10, hinge housing 9, lubricating ring 2, rotating cam 8, fixing cam 7, case 6 for the rotation shaft, coil spring 5, fixing cam 4, rotating cam 3, lubricating ring 2 and caulking ring 1. The opening/closing system is constituted by opening/closing shaft 12, lubricating ring 13, case 14 for the opening/closing shaft, rotating cam 15, fixing cam 16, coil spring 17, fixing cam 18, rotating cam 19, lubricating ring 13, bracket 20, and fixing pin 21.

In the two-shaft hinge shown in Fig. 2, two pairs of rotation torque and opening/closing torque generating portions are provided on each shaft, attached to the case 6 for rotation and case 14 for opening/closing and assembled as rotation torque and opening and torque units. Fig. 2 shows an example assembled as opening/closing unit 23.

In the case 6 for the rotation shaft, grooves 6-1, 6-2 into which after-mentioned protrusions 3-6 and 8-6 on outer peripheries of rotation cams 3 and 8 are inserted, are provided. In hinge housing 9, hole 9-6 through which rotation shaft 11 pierces, space 9-5 to which the rotation torque unit is fitted and attached, hole 9-2 to which the opening/closing shaft torque unit is fitted and attached, protrusion 9-3 to restrict the rotating angle, and hole 9-1 through which harness wiring can pass, are provided. Fixing base 10 has, at the center thereof, a hole through which the rotation shaft pierces, and protrusions 10-1, 10-2, which abut on protrusion 9-3 of the hinge housing for the rotation restricting, to restrict the rotation. A range in which the housing portion can rotate in the example of Fig. 2 is set to 180°, which allows protrusion 9-3 of the housing to rotate clockwise from an initial position where it first abuts on protrusion 10-1 of the base to a position where it abuts on right protrusion 10-2.

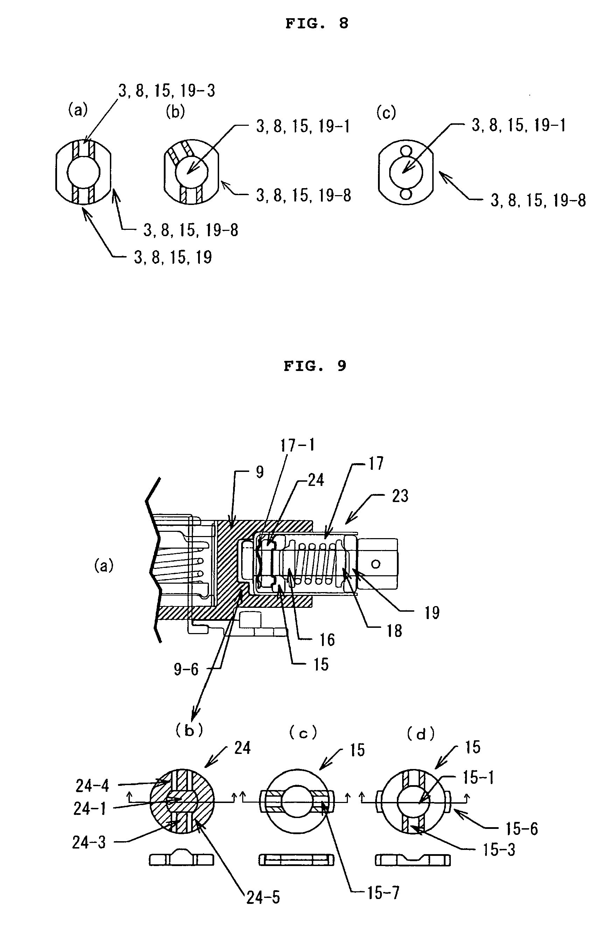

The cross section of opening/closing shaft 12 is a deformed shape, and the cross sections indicated with 12-1 and 12-2 in Fig. 2 are an oval shape. Similarly, the cross sectional shape of the case 14 for opening/closing shaft is an oval shape (surfaces 14-1, 14-2), and the outer peripheries of rotating cams 15, 19 used to be fitted and attached to the inside are partially cut to be an oval as shown in Fig. 8(a), (b), and (c) for use. The combinations of the cases 6, 14 and the rotating cams 3, 8, 15, 19 shown in Fig. 2 were explained in the cases of grooves and ovals individually in this example, but it can employ either design which is advantageous in terms of the fitting manner, reduction in size, and strength.
Metal or resin can be used as a material of the components used in the two-shaft hinge of the present invention shown in Fig. 2, and heat treatment, surface treatment and the like are carried out accordingly.

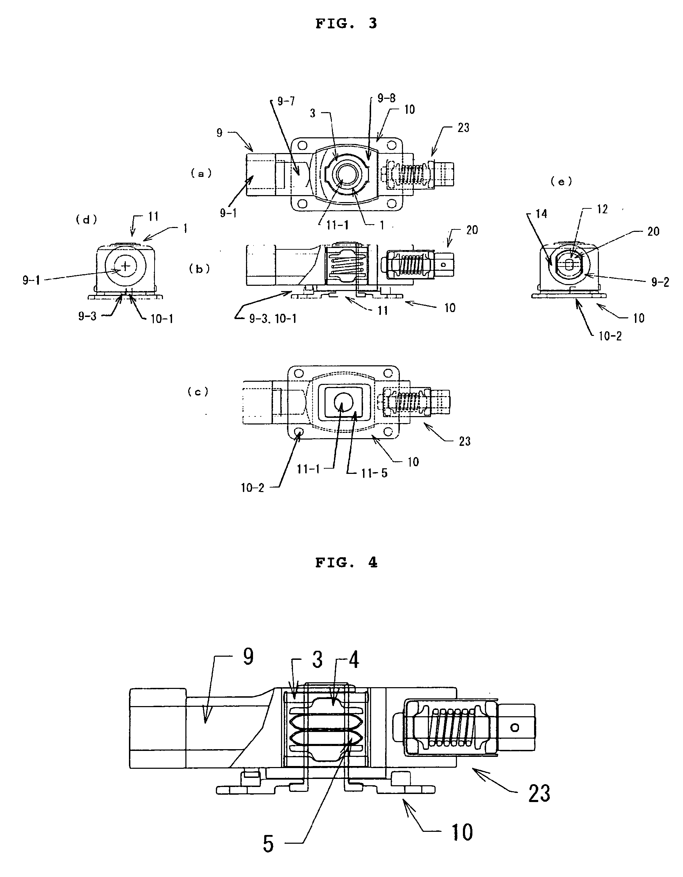

Fig. 3 shows a two-shaft hinge according to an embodiment of claim 1, claim 6, claim 8, and claim 12 of the present invention, and (a) is a top view, (b)is a front view, (c) is a bottom view, and, (c) and (d) are side views.
In the top view of (a), penetrating hole 11-1 is present at the center of rotation shaft 11, and, on the left side of housing 9, a through-hole is provided from hole 9-7 to end 9-1. A part of space 9-5 at the center portion of housing 9 has a structure of concave groove 9-8, and protrusion (3, 8, 15, 19-6) of the rotating cam of the rotation torque unit after-mentioned is fitted and attached to the groove, whereby the hinge has a structure in which a sliding torque and a click torque (force) of the torque unit are transmitted securely without causing a free-play.
The bottom view of (c) shows a state that rotation shaft 11 is fitted and attached to base 10, and flange 11-5 on the lowest portion of rotation shaft 11 has a structure to prevent the occurrence of a free-play in rotation by the square shape. Hole 10-2 to fix a device is provided on each of the four corners of base 10.
The left side view of (d) shows a state that shaft through-hole 9-1 and the rotation stopper abut on each other (9-3, 10-1).
The right side view of (e) shows a state that the shape of case 14 incorporating opening/closing shaft 12 and opening/closing torque unit 23 is oval.

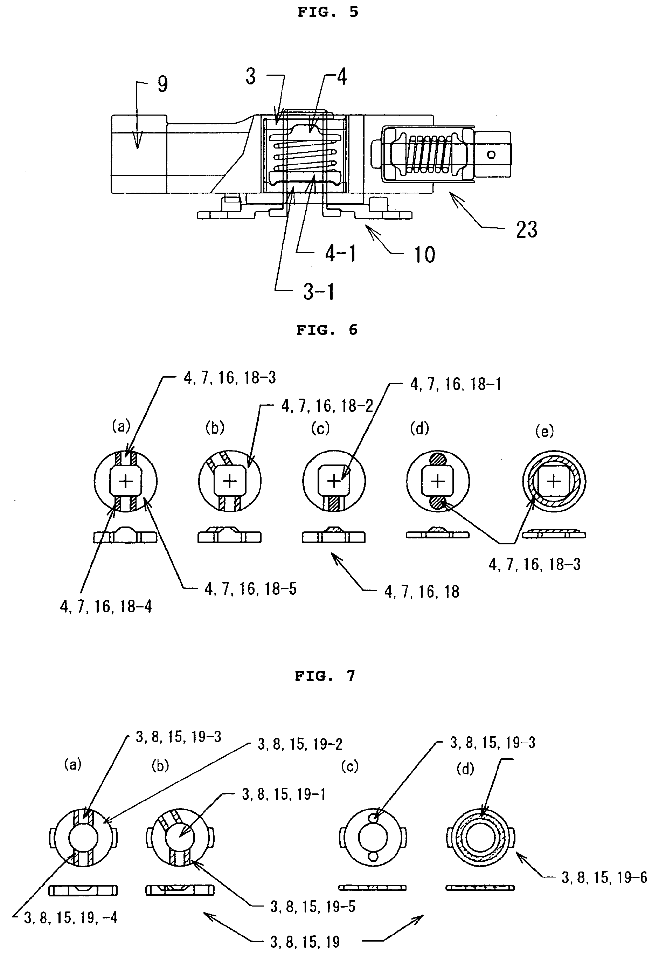

Fig. 4 is an example showing the two-shaft hinge of an embodiment of claim 7 of the present invention, and it shows the example in which a disc spring is used instead of the coil spring therein. An example in which a waved plate spring is used is shown in Fig. 9.

Fig. 5 is an example showing the two-shaft hinge of an embodiment of claim 3 of the present invention, and it shows an example in which fixing cam 4-1 and rotating cam 3-1 on a lower portion, which are used in the torque generating portion of the rotation shaft, are different from fixing cam 4 and rotating cam 3 on an upper portion in terms of the groove (concave) and the protrusion (convex) formed on abutting surfaces. The shape of the cam abutting surfaces can be used by combining the fixing cam and the rotating cam shown in Fig. 6, Fig. 7, and Fig. 8, and can be selected appropriately to employ in accordance with the magnitude and a requested generation position of the sliding torque and click torque in rotation and opening/closing operation of the two-shaft hinge.

Fig. 6 (a), (b), (c), (d) and (e) show examples of the shapes of abutting surface of fixing cam 4, 7, 16, 18 for rotation torque generation and opening/closing torque generation, which are used in the two-shaft hinge of the present invention. First, in any of these examples, hole 4, 7, 16, 18-1 into which the rotation shaft or the opening/closing shaft is inserted are in the form of a quadrangle, and when being put around the shaft of a similar shape, the cams can move in the axial direction but they are inhibited from rotating with respect to the shaft. The protrusion (convex) on the abutting surface is formed from flat surface 4, 7, 16, 18-5 through inclined surface 4, 7, 16, 18-4. The shape of protrusion (convex) 4, 7, 16, 18-3 formed on the cam abutting surface can be a groove-like shape, a projection-like shape, a circular shape or the like, and the shape can be selected and used appropriately in accordance with the torque request such as the number and setting angle.

Fig. 7(a), (b), (c) and (d) show examples of the shape of abutting surface of rotating cam 3, 8, 15, 19 for rotation torque generation and opening/closing torque generation, which are used in the two-shaft hinge of the present invention. First, in any of these examples, hole 3, 8, 15, 19-1 into which the rotation shaft and the opening/closing shaft is inserted are circular holes, and when putting around the shaft whose cross section is a deformed shape, the cams can rotate with respect to the shaft. The groove (concave) on the abutting surface is formed from flat surface 3, 8, 15, 19-2 through inclined surface 3, 8, 15, 19-4. The shape of groove (concave) 3, 8, 15, 19-3 formed on the cam abutting surface can be a groove-like shape, a projection-like shape, a circular shape or the like, and can be selected appropriately to employ in accordance with the torque request such as the number and setting angle. On an outer periphery of the rotating cam, protrusion 3, 8, 15, 19-6 to be fitted and attached to grooves 6-1, 6-2 of case 6, 14 for the rotation shaft and the opening/closing shaft.
It is noted that the above-mentioned fixing cam and rotating cam are examples, and other aspects are possible as long as a torque is generated on the abutting surface between the fixing cam and the rotating cam.

Fig. 8 shows an example having groove (concave) 3, 8, 15, 19-3 similar to the rotating cams shown in Fig. 7 and an outer periphery (3, 8, 15, 19-8) cut into an oval shape.

In the examples shown in Fig. 6, Fig. 7 and Fig. 8, fixing cam 4, 7, 16, 18 forms a protrusion (convex) on the abutting surface, and rotating cam 3, 8, 15, 19 forms a groove (concave) on the abutting surface. However, in the present invention, a groove (concave) may be formed on the fixing cam and a protrusion (convex) may be formed on the rotating cam contrary. The abutting surface to form a protrusion and a groove is not limited to one side of the cam, thus a cam in which the abutting surfaces (a protrusion and a groove) are formed on both sides of the cam as shown in the example of rotating cam 15 in Fig. 9(a) can be used.

Fig. 9 (a) is an example showing the two-shaft hinge of an embodiment of claim 4 and claim 7 of the present invention, three pairs of torque generating portions for the opening/closing shaft (abutting surfaces of 15-24, 15-16, 18-19) are mounted and waved plate spring 17-1 is further mounted. Grooves (concaves) are formed on both side of rotating cam 15, fixing cams 16, 24 are abutted on the both sides of rotating cam 15 in a sandwich fashion, and abutting surfaces are provided and increased to three pairs with adding a right side generating potion, whereby the sliding and click torque generation position at opening/closing operation is applicable to more complex patterns. For example, a click position, which is an important part at opening/closing rotation, can be created so that a plurality of click torques can be generated within a limited rotating angle.
Fig. 9 (b), (c) and (d) show protrusions (convexes) and grooves (concaves) on the abutting surfaces of fixing cam 24 and rotating cam 15 used in (a). Rotating cam 15 shows the example that the angles of the grooves (concaves) on front and back of the abutting surface are different by 90° as shown in (c) and (d). The present invention, which enables complex click operation by combining the angles forming the protrusions of fixing cams 16 and 24 and the angles forming the grooves (concaves) formed on both sides of rotating cam 15, also enables an operation which cannot be realized equally by one pair of rotating and fixing cams, and is extremely effective in durability against wear which occurs on the cam abutting surface at the torque generation and in stability of torque, whereby a long-life hinge without wearing away can be realized.

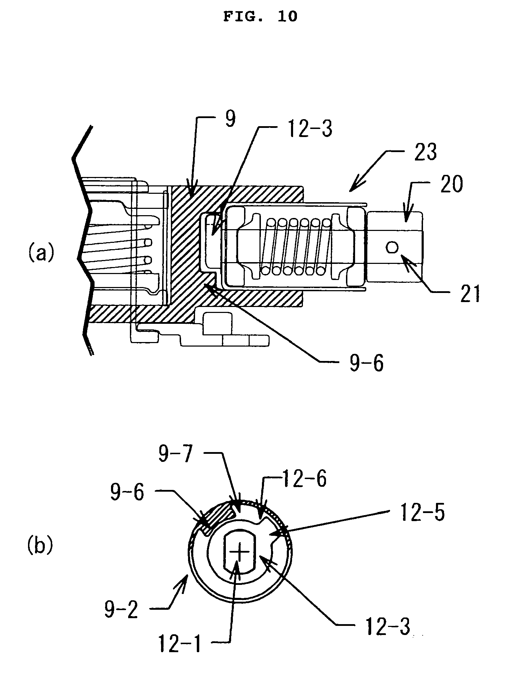

Fig. 10 (a) is an example showing the two-shaft hinge of an embodiment of claim 6 of the present invention, and a stopper mechanism to limit the rotating angle of the opening/closing shaft 12 is mounted. The angle limiting stopper is achieved by abutting protrusion 12-5 of opening/closing shaft 12 on protrusion 9-6 provided in hinge housing 9.
Fig. 10 (b) shows an example in which protrusion 12-5 is provided in a part of flange 12-3 of oval-shaped opening/closing shaft 12-1, and both-side portion 12-6 of protrusion 12-5 is abutted on both-side portion 9-7 of protrusion 9-6 provided in the hinge housing. Drawing (b) shows the example in which protrusion 12-5 of the opening/closing shaft is formed across approximately 30° , protrusion 9-6 of the hinge housing is formed across approximately 60°, and rotation shaft 12 can rotate through approximately 270° .

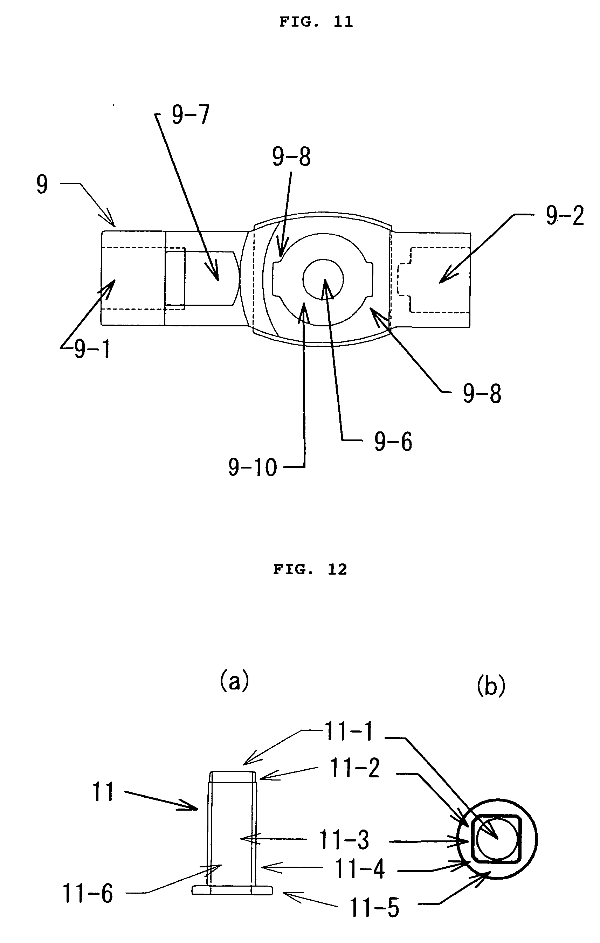

Fig. 11 shows an appearance of hinge housing 9 used in the present invention. Hole 9-6, bottom 9-10 and groove 9-8 are formed in the middle, through-holes (9-7 through 9-1) are formed in the left section, and insertion hole 9-2 of opening/closing shaft torque unit 23 is formed in the right section.

Fig. 12 (a) and (b) show rotation shaft 11. The shaft has penetrating hole 11-1, step 11-2 to which caulking ring 1 is put around and fixed, square surface 11-3, 11-4 fitted with fixing cam 4, 7, circular surface 11-4 which rotates after rotating cams 3, 8 are put around, and fixing flange 11-5.

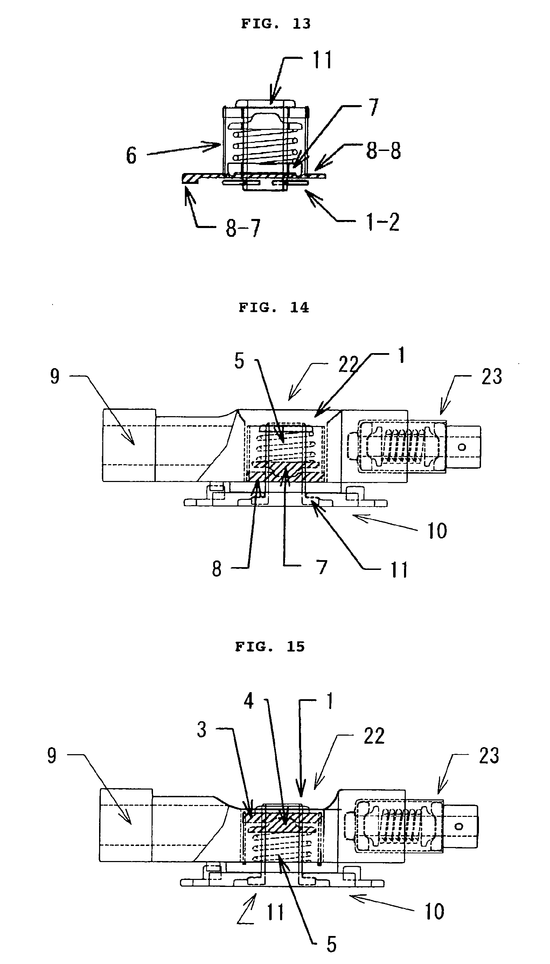

Fig. 13 is an example showing the two-shaft hinge of embodiments of claim 10 and claim 11 of the present invention. The figure shows an example in which a component, rotating cam 8 of the rotation torque generating portion is omitted and rotating cam 8-7 molded as a different member and sharing bottom 9-10 of hinge housing 9 is incorporated for the purpose of reducing the height of the two-shaft hinge. By using the different member, not only the components can be reduced but also the strength of the hinge can be enhanced. The rotation torque unit shown in Fig. 13 shows the example of a structure in which stop ring 1-2 is assembled to one side of the rotation shaft so that the rotation torque unit can be composed in the offline setup.

Fig. 14 and Fig. 15 are examples showing the two-shaft hinge of an embodiment of claim 2 of the present invention. Fig. 14 shows an example in which the rotation torque generating portion is mounted on a lower portion of coil spring 5. Fig. 15 shows an example in which the rotation torque generating portion is mounted on an upper portion of coil spring 5. The rotation torque unit is obtained by inserting rotation shaft 11 into a pair of fixing cam and rotating cam (7, 8) or (3, 4) and coil spring 5 and caulking-fixed by caulking ring 1. The present invention can be employed in a case of reducing the space or height of upper portion 22 of the rotation torque unit as shown in Fig. 14 and Fig. 15.

### BRIEF DESCRIPTION OF THE DRAWINGS

[Fig. 1] This is a partial cross-sectional front view showing an example of embodiments of the inventions of claim 1, claim 8 and claim 12;
[Fig. 2] Fig. 2 is a component configuration diagram showing an example of embodiments of the inventions of claim 1, claim 5, claim 6, claim 11, and the like;
[Fig. 3] (a) is a top view, (b) is a front view, (c) is a bottom view, (d) is a left side view, and (e) is a right side view, each showing an embodiment of the inventions of claim 1, claim 6, claim 8, and claim 12;
[Fig. 4] This is a partial cross-sectional front view showing an embodiment of the invention of claim 7;
[Fig. 5] This is a partial cross-sectional front view showing an embodiment of the invention of claim 3;
[Fig. 6] This is a componential drawing of fixing cams of the rotation and the opening/closing torque generating portions which are used in the present invention;
[Fig. 7] This is a componential drawing of rotating cams of the rotation and the opening/closing torque generating portions which are used in the present invention;
[Fig. 8] This is a componential drawing of rotating cams of the rotation and the opening/closing torque generating portions which are used in the present invention;
[Fig. 9] These show an embodiment of claim 4 and claim 7, in which (a) is a partial cross-sectional view, the upper figures of (b) (c) and (d) are partial plan views of a fixing cam and a rotating cam, and the lower figures of (b) (c) and (d) are cross-sectional views of same;
[Fig. 10] (a) is a cross-sectional view and (b) is a component configuration diagram, each showing an embodiment of claim 6;
[Fig. 11] This shows an appearance of a hinge housing used in the present invention;
[Fig. 12] (a) is a front view and (b) is a top view, each showing an aspect of the rotation shaft used in the present invention;
[Fig. 13] This is a partial cross-sectional front view showing an embodiment of the inventions of claim 10 and claim 11;
[Fig. 14] This is a partial cross-sectional front view showing an embodiment of the invention of claim 2;
[Fig. 15] This is a partial cross-sectional front view showing an embodiment of the invention of claim 2; and
[Fig. 16] This is a front view showing a conventional example.
DESCRIPTION OF REFERENCE NUMERALS
- 1: caulking ring
- 2: lubricating ring for rotation shaft
- 3,8: rotating cam for rotation shaft (concave cam)
- 4,7: fixing cam for rotation shaft (convex cam)
- 5: coil spring, disc spring for rotation shaft
- 6: case for rotation shaft
- 9: hinge housing
- 10: fixing base
- 11: rotation shaft
- 12: opening/closing shaft
- 13: lubricating ring for opening/closing shaft
- 14: case for opening/closing shaft
- 15,19: rotating cam for opening/closing shaft (concave cam)
- 16,18: fixing cam for opening/closing shaft (convex cam)
- 17: coil spring for opening/closing shaft
- 20: plug
- 21: fixing pin

## Claims

1. A two-shaft hinge having a rotation shaft and an opening/closing shaft, comprising: a rotation torque unit in which a plurality of rotation torque generating portions are provided on the rotation shaft, the rotation torque generating portion being assembled by putting a coil spring around an outer periphery of the rotation shaft having a penetrating hole and by abutting a fixing cam and a rotating cam on both ends of the coil spring; and an opening/closing torque unit in which a plurality of opening/closing torque generating portions are provided on the opening/closing shaft, the opening/closing torque generating portion being assembled by putting a coil spring around the opening/closing shaft and by abutting a fixing cam and a rotating cam on both ends of the coil spring; wherein, the two-shaft hinge has a two-shaft structure in which an axial direction of the rotation shaft and an axial direction of the opening/closing shaft are assembled to a hinge housing to be perpendicular to each other, the torque units which generate a sliding torque and a click torque at rotation and opening/closing operation function on the rotation shaft and the opening/closing shaft, and the opening/closing torque unit is assembled to either side or both right and left sides of the rotation torque unit.

2. A two-shaft hinge having a rotation shaft and an opening/closing shaft, comprising: a rotation torque unit in which a pair of rotation torque generating portions are provided on the rotation shaft, the rotation torque generating portion being assembled by putting a coil spring around an outer periphery of the rotation shaft having a penetrating hole and by abutting a fixing cam and a rotating cam on one end of the coil spring; and an opening/closing torque unit in which a plurality of opening/closing torque generating portions are provided on the opening/closing shaft, the opening/closing torque generating portion being assembled by putting a coil spring around the opening/closing shaft and by abutting a fixing cam and a rotating cam on both ends of the coil spring; wherein, the two-shaft hinge has a two-shaft structure in which an axial direction of the rotation shaft and an axial direction of the opening/closing shaft are assembled to a hinge housing to be perpendicular to each other, the torque units which generate a sliding torque and a click torque at rotation and opening/closing operation function on the rotation shaft and the opening/closing shaft, and the opening/closing torque unit is assembled to either side or both right and left sides of the rotation torque unit.

3. The two-shaft hinge according to claim 1 or claim 2, wherein the sliding torque and the click torque are generated by abutting the fixing cam and the rotating cam in the plurality of rotation torque generating portions provided on the rotation shaft, and positions of a groove (concave) and a protrusion (convex) of the cams used by the rotation shaft by pair and/or a different number of cams are combined, whereby the rotation torque unit which incorporates with the plurality of rotation torque generating portions having different torque generation operations is formed, and the torque unit is assembled on the rotation shaft.

4. The two-shaft hinge according to claim 1 or claim 2, wherein the sliding torque and the click torque are generated by abutting the fixing cam and the rotating cam in the plurality of opening/closing torque generating portions provided on the opening/closing shaft, and positions of a groove (concave) and a protrusion (convex) of the cams used by the opening/closing shaft by pair and/or a different number of cams are combined, whereby the opening/closing torque unit which incorporates with the plurality of opening/closing torque generating portions having different torque generation operations is formed, and the torque unit is assembled on the opening/closing shaft.

5. The two-shaft hinge according to claim 1 or claim 2, wherein a part of a cross section of the rotation shaft and the opening/closing shaft is formed to be a quadrangle or to have a major axis and a minor axis, which is other than a circle, and the rotation shaft and the opening/closing shaft having a shape which allows the fixing cams for rotation and opening/closing used in the rotation and the opening/closing torque generating portions to move in an axial direction of the rotation shaft and the opening/closing shaft but which inhibits them from rotating on a periphery of the rotation shaft, are employed.

6. The two-shaft hinge according to claim 1 or claim 2, wherein a stopper mechanism to restrict a rotation angle and an opening/closing angle of the rotation shaft and the opening/closing shaft is mounted so that a rotation range of the rotation shaft and the opening/closing shaft is restricted.

7. The two-shaft hinge according to claim 1 or claim 2, wherein a disc spring, a waved plate spring, or a thin plate spring is employed in place of the coil spring which generates an abutting force in the torque generating portions used in the rotation torque unit and the opening/closing torque unit, so that a size is reduced.

8. The two-shaft hinge according to claim 1 or claim 2, wherein a penetrably holed shaft in which a through-hole is provided at a center of the rotation shaft is used to enable a harness wiring.

9. The two-shaft hinge according to claim 1 or claim 2, wherein a case for the rotation shaft and a case for the opening/closing shaft in each of which an outer periphery thereof partially has a groove or a deformed cross section other than a circle are fitted with or fixed to the rotating cams in each of which an outer periphery thereof has a protrusion or a deformed cross section, in order to effectively transmit a sliding torque force and a click torque force, which are generated in the rotating cams used on the rotation shaft and the opening/closing shaft.

10. The two-shaft hinge according to claim 1 or claim 2, wherein the rotating cam used in the rotation torque generating portion is configured to be another member as a bottom portion to which the rotation torque unit is fitted and attached in the hinge housing, whereby reduction in a number of components, reduction in size, and improvement in strength of the hinge housing are achieved.

11. The two-shaft hinge according to claim 1 or claim 2, wherein the rotation torque unit and the opening/closing torque unit are assembled as an independent unit, thereafter they are fitted and attached to or screwed into the hinge housing in which a means for fitting or screwing to fix is provided in advance.

12. The two-shaft hinge according to claim 1 and claim 2, wherein, for mounting and fixing the two-shaft hinge to a device chassis, a fixing base component adhered to the rotation shaft is added and the two-shaft hinge is fixed by the base, whereby the device chassis is designed easily.
